(19) Europäisches Patentamt
European Patent Office
Office européen des brevets

(11) **EP 3 570 253 B1**

(12) **EUROPEAN PATENT SPECIFICATION**

(45) Date of publication and mention
of the grant of the patent:
**17.03.2021 Bulletin 2021/11**

(21) Application number: **17897025.7**

(22) Date of filing: **17.02.2017**

(51) Int Cl.:
**G06T 17/00** [(2006.01)]

(86) International application number:
**PCT/CN2017/073874**

(87) International publication number:
**WO 2018/148924 (23.08.2018 Gazette 2018/34)**

(54) **METHOD AND DEVICE FOR RECONSTRUCTING THREE-DIMENSIONAL POINT CLOUD**

VERFAHREN UND VORRICHTUNG ZUR REKONSTRUKTION EINER DREIDIMENSIONALEN PUNKTWOLKE

PROCÉDÉ ET DISPOSITIF DE RECONSTRUCTION D'UN NUAGE DE POINTS TRIDIMENSIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2019 Bulletin 2019/47**

(73) Proprietor: **SZ DJI Technology Co., Ltd.**
**Shenzhen, Guangdong 518057 (CN)**

(72) Inventors:
- **ZHAO, Kaiyong**
**Shenzhen**
**Guangdong 518057 (CN)**
- **PAN, Cihui**
**Shenzhen**
**Guangdong 518057 (CN)**
- **MA, Yuewen**
**Shenzhen**
**Guangdong 518057 (CN)**
- **YAO, Yao**
**Shenzhen**
**Guangdong 518057 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**CN-A- 102 622 776      CN-A- 103 942 832**
**CN-A- 105 865 462      CN-A- 106 228 513**
**US-A1- 2003 097 057**

EP 3 570 253 B1

## Description

### TECHNICAL FIELD

The present application relates to the field of point cloud data processing and, more particularly, to a method and an apparatus for a 3-dimensional point cloud reconstruction.

### BACKGROUND

In existing technologies, a three-dimensional (3D) point cloud reconstruction is usually performed based on a simultaneous localization and mapping (SLAM) algorithm. In a conventional SLAM algorithm, usually, feature points in image data are extracted first, and then a 3D point cloud is reconstructed based on the feature points in the image data (or points with notable gradients). In the image data, the number of the feature points (or the points with notable gradients) is relatively small. Thus, a 3D point cloud reconstructed based on the feature points (or the points with notable gradients) is a sparse (or semi-dense) 3D point cloud.

A sparse 3D point cloud may miss important information in a 3D scene, and is not suitable for a task that needs a relatively high accuracy on the 3D scene. For example, to reconstruct a 3D point cloud for machine navigation, a sparse 3D point cloud may likely miss important features of navigation. For example, a sparse 3D point cloud may miss a traffic light, or a sparse 3D point cloud may not provide accurate road information, such as information about whether a road in a 3D scene is allowed to travel on.

CN 103 942 832 A discloses a real-time indoor scene reconstruction method based on on-line structure analysis. According to the method, a depth camera serves as an input, pixels of a depth image input by each frame are marked one by one, planes and objects in the depth image are respectively marked, the corresponding planes and the corresponding objects are updated according to the marks, and new depth images are obtained after synthesis and used for calculating the position of a video camera of the next frame. The KinectFusion is enhanced through structural information, the planes and the objects can be segmented, the structural information is updated through real-time analysis, a user can control the whole scanning process, and scanning workloads are reduced. The stability of a system can be further improved by analyzing the structure of the planes, the mutual relation between the planes and the repeated objects, and a result is more accurate.

CN 102 622 776 A discloses a three-dimensional environment reconstruction. In an example, a 3D model of a real-world environment is generated in a 3D volume made up of voxels stored on a memory device. The model is built from data describing a camera location and orientation, and a depth image with pixels indicating a distance from the camera to a point in the environment. A separate execution thread is assigned to each voxel in a plane of the volume. Each thread uses the camera location and orientation to determine a corresponding depth image location for its associated voxel, determines a factor relating to the distance between the associated voxel and the point in the environment at the corresponding location, and updates a stored value at the associated voxel using the factor. Each thread iterates through an equivalent voxel in the remaining planes of the volume, repeating the process to update the stored value.

### SUMMARY

The present application provides a method and an apparatus for a 3-dimensional point cloud reconstruction to improve an accuracy of reconstructed 3-dimensional point cloud. The invention is defined by independent claim 1 defining a method for 3-dimensional point cloud reconstruction and independent claim 8 defining an apparatus for reconstructing a three-dimensional point cloud. Embodiments of the invention are defined by the dependent claims.

In one aspect, there is provided a method for reconstructing a three-dimensional point cloud. The method includes obtaining image data in a current view angle; generating voxels of a target object in the current view angle according to the image data, where the voxels of the target object include a first voxel, and the first voxel contains depth information; discarding the first voxel if a value of the depth information of the first voxel is not within a preset range, the preset range being based on a surface of the target object; and fusing the first voxel with stored voxels if the value of the depth information of the first voxel is within the preset range; wherein generating the voxels of the target object in the current view angle according to the image data includes: determining, according to the image data, whether the target object is a moving object; and if the target object is a moving object, generating the voxels of the target object such that a value of depth information of each voxel in the target object is not within the preset range.

In another aspect, there is provided an apparatus for reconstructing a three-dimensional point cloud. The apparatus includes an obtaining module configured to obtain image data in a current view angle; a generating module configured to generate, according to the image data, voxels of a target object in the current view angle, where a voxel of the target object includes a first voxel, and the first voxel contains depth information; a discarding module configured to discard the first voxel if a value of the depth information of the first voxel is not within a preset range, the preset range being based on a surface of the target object; and a fusing module configured to fuse the first voxel with stored voxels if the value of the depth information of the first voxel is within the preset range, wherein the generating module is further configured to: determine, according to the image data, whether the target object is a moving object; and if the target object is a moving object, generate the voxels of the target object such that a value of depth information of each voxel in the target object is not within the preset range.

In another aspect, there is provided an apparatus for reconstructing a three-dimensional point cloud. The apparatus includes a memory and a processor. The memory is used for storing instructions, and the processor is used for executing instructions stored in the memory to perform the methods described in the above aspects.

The technical solution provided by the present application uses voxels as points in the three-dimensional point cloud, and can reconstruct a high accuracy dense three-dimensional point cloud. Further, in the technical solution provided in the present application, depth information is stored in voxels of the target object, and the voxels of the target object are screened based on the depth information of the voxels. Voxels having depth information that does not meet the requirement are discarded, which reduces the amount of point cloud data that needs to be fused and stored, and improves a real-time performance of the dense 3-dimensional cloud point reconstruction process.

## BRIEF DESCRIPTION OF THE DRAWINGS

FIG. 1 is a general flow chart of a simultaneous localization and mapping (SLAM) algorithm.
FIG. 2 is a schematic flow chart of a method for a 3-dimensional (3D) point cloud reconstruction provided by the embodiments of the present invention.
FIG. 3 is a detailed flow chart for step 240 in FIG. 2.
FIG. 4 is a schematic structural diagram of an apparatus for 3D point cloud reconstruction provided by an embodiment of the present invention.
FIG. 5 is a schematic structural diagram of an apparatus for 3D point cloud reconstruction provided by another embodiment of the present invention.

## DETAILED DESCRIPTION OF THE EMBODIMENTS

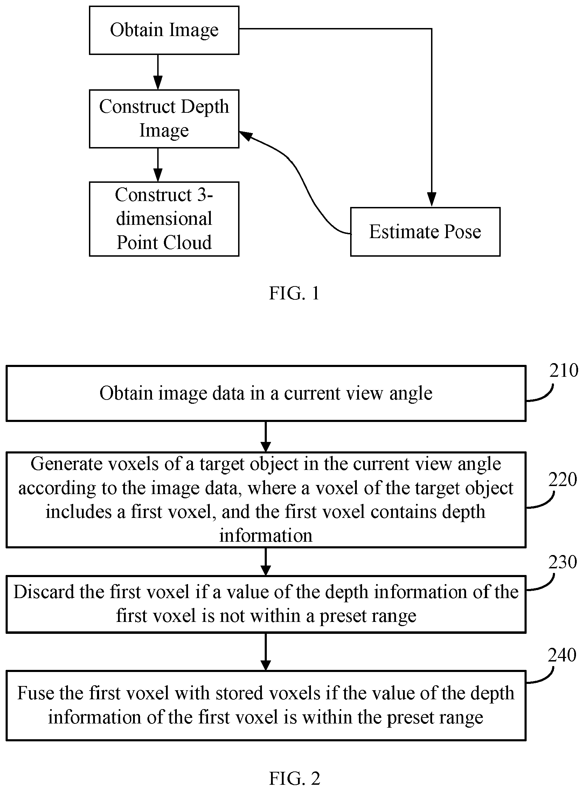

FIG. 1 is a general flow chart of a simultaneous localization and mapping (SLAM) algorithm. As shown in FIG. 1, camera's pose estimation and a 3D point cloud reconstruction process are bundled in a cycle. The two support each other and influence each other, so as to achieve simultaneous localization and three-dimensional point cloud reconstruction purposes.

The three-dimensional point cloud reconstructed by the SLAM algorithm may be mainly formed of feature points in the image data (or points with notable gradients). In the image data, the number of the feature points (or the points with notable gradients) may be relatively small. Thus, the 3D point cloud reconstructed by using the SLAM algorithm may be generally a sparse point cloud, and is not suitable for a task that needs a relatively high accuracy on the 3D scene.

A voxel is a small volume unit in a 3D space. An object in a 3D space may be usually made up of tens of thousands of piled-up voxels. Thus, the voxels of the object may have the characteristics of large number and dense distribution, and may be suitable for generating a dense 3D point cloud. Based on that, the embodiments of the present invention provide a 3D point cloud reconstruction method based on voxels to generate a dense 3D point cloud. Compared with a sparse point cloud, a dense 3D point cloud may have a relatively high accuracy, and can retain important information of the 3D scene.

In the existing technologies, generally, object voxels are usually stored in a 3D array, and each storage unit can be used to store a voxel. When it is needed to search for a target voxel of the object in the storage space, addressing is directly performed through subscripts of the 3D array. The voxel storage method based on the 3D array can reduce voxel search complexity. However, such a storage method needs to ensure a continuity of storage. That is, each voxel of the object needs to be stored. In order not to destroy the continuity of storage, even if a voxel is an empty voxel (a voxel that does not contain any useful information, such as a voxel inside the target object), a storage space needs to be allocated for the voxel, and voxels cannot be arbitrarily discarded. In fact, among object voxels, generally more than 90% of the voxels may be empty voxels. If these voxels are retained, a lot of storage and computing resources may be wasted, resulting in a relatively poor real-time performance in the voxel-based 3D point cloud reconstruction process and a limitation that only small-area and small-scale scenes, such as indoor scenes, can be reconstructed.

With reference to FIG. 2, the 3D point cloud reconstruction method provided by the embodiments of the present invention is described below in detail. The 3D point cloud reconstruction method provided by the embodiments of the present invention can be used to generate a 3D point cloud map, or for machine navigation. The method shown in FIG. 2 can be performed by a mobile apparatus equipped with a camera. The mobile apparatus may be, for example, a robot, an unmanned aerial vehicle (UAV), a car or a wearable device. Specifically, the mobile apparatus can capture an unknown scene encountered by the mobile apparatus during a movement through the camera and generate a 3D point cloud map of the unknown scene based on the captured image data.

FIG. 2 is a schematic flow chart of a method for 3D point cloud reconstruction provided by an embodiment of the present invention. The method shown in FIG. 2 may include the following steps.

At 210, image data in a current view angle is obtained.

At 220, voxels of a target object in the current view angle are generated according to the image data. A voxel of the target object includes a first voxel. The first voxel contains depth information.

It should be understood that the above-described target object may be any one of objects detected in the current view angle. In addition, the first voxel may be any voxel in the voxels of the target object.

At 230, if a value of the depth information of the first voxel is not within a preset range, the first voxel is discarded.

At 240, if the value of the depth information of the first voxel is within the preset range, the first voxel is fused with stored voxels.

In the embodiments of the present invention, voxels may be used as points in a 3D point cloud, and a high accuracy dense 3D point cloud may be reconstructed. Further, in the embodiments of the present invention, depth information may be stored in voxels of the target object, and the voxels of the target object may be screened based on the depth information of the voxels. Voxels having depth information that does not meet the requirement may be discarded. As such, the amount of the point cloud data that needs to be fused and stored may be reduced, and a real-time performance of the dense 3D cloud point reconstruction process may be improved.

In the present invention, the above-described preset range is set using a surface of the target object as a base, such that voxels in the vicinity of the surface of the object (or referred to as visible voxels) may be retained, and other voxels may be discarded. That is, the embodiments of the present invention focus on those among the voxels of the target object that store useful information, thereby making more efficient use of storage and computing resources to improve the real-time performance of the voxel-based 3D point cloud reconstruction process.

Step 220 describes a voxelization process of the target object. In the embodiments of the present invention, voxelization manner of the target object is not restricted. For example, step 220 may include generating a depth image in the current view angle according to the image data, and performing voxelization on the target object according to the depth image to obtain the voxels of the target object.

The above-described generating the depth image in the current view angle according to the image data may include estimating a parallax corresponding to each pixel in the image data, and converting the parallax corresponding to each pixel to a depth value corresponding to each pixel.

For example, formula $z_i = bf/d_i$ may be used to determine a depth value corresponding to each pixel, where $z_i$ and $d_i$ represent a depth value and a parallax of an i-th pixel in the image data, respectively, b represents a baseline, and f represents a focal length.

It should be noted that, each pixel in the image data may correspond to a depth value, and solving processes of depth values corresponding to the pixels may be performed in parallel to improve a processing efficiency of the image data.

After the depth image is calculated, a 3D model of the target object is obtained. Then, a certain algorithm may be used to perform voxelization on the 3D model of the target object. For example, first, a bounding box of the 3D model is created according to the depth values in the depth image, and then the bounding box is decomposed into a plurality of small volume units based on octree. Each volume unit may correspond to a voxel of the target object.

If a target storage space includes a storage space of a first voxel, color information and depth information of the first voxel can be fused with color information and depth information in the storage space of the first voxel, respectively. The fusing method is described below in detail. There are various fusing methods for color information and depth information. The methods are described in detail below in conjunction with detail embodiments.

Optionally, in some embodiments, the first voxel may include color information and a weight of the color information of the first voxel, and the above-described fusing the first voxel with stored voxels may include: if the target storage space includes a storage space of the first voxel, obtaining a weighted sum of the color information of the first voxel and color information of voxel in the storage space of the first voxel according to the weight of the color information of the first voxel. Of course, the embodiments of the present invention are not limited thereto. Further, the color information of the first voxel may also be directly used to replace the color information of voxel in the storage space of the first voxel.

Optionally, in some embodiments, the first voxel may further include a weight of depth information of the first voxel. The above-described fusing the first voxel with the stored voxels may include: if the target storage space includes a storage space of the first voxel, obtaining a weighted sum of the depth information of the first voxel and the depth information of voxel in the storage space of the first voxel according to the weight of the depth information of the first voxel. Of course, the embodiments of the present invention are not limited thereto. Further, the depth information of the first voxel may also be directly used to replace the depth information of voxel in the storage space of the first voxel.

In the embodiments of the present invention, the manner of selecting a value for the depth information of the first voxel is not restricted. In some embodiments, the value of the depth information of the first voxel may be z value of the first voxel in a camera coordinate system. In some other embodiments, the value of the depth information of the first voxel may be a truncated signed distance function (tsdf) value. The tsdf value can be used to indicate a distance between the first voxel and a surface of the target object (a surface of the target object that is closest to the first voxel).

For example, the first voxel can use the following data structure:

```
struct voxel {
float tsdf;
uchar color[3];
uchar weight;
},
```

where tsdf is the depth information of the first voxel and is used to represent the distance between the first voxel and the surface of the target object, color[3] is used to represent color information of the first voxel, and weight is used to represent the weight of the color information and/or the depth information of the first voxel.

Assuming that the preset range is $(D_{min}, D_{max})$, if tsdf value of the first voxel satisfies $D_{min} < tsdf < D_{max}$, it is considered that the first voxel contains useful information (or the first voxel is a visible voxel), and the first voxel is retained. If tsdf value of the first voxel does not satisfy $D_{min} < tsdf < D_{max}$, it is considered that the first voxel does not contain useful information (or the first voxel is an invisible voxel), and the first voxel is discarded.

It should be noted that the 3D point cloud reconstruction may be a continuous process. In the 3D point cloud reconstruction process, the mobile apparatus may first select an initial view angle (hereinafter referred to as a first view angle) to capture images, then perform voxelization on an object of the first view angle and store voxels having depth information that meets needs. Then, the mobile apparatus may adjust the camera's pose, select another view angle (hereinafter referred to as a second view angle) to capture images, and obtain new voxels. Because a difference between two adjacent view angles is usually small, the objects captured in the two adjacent view angles may overlap with each other. Thus, new voxels captured in the second view angle may need to be fused with the stored voxels. The foregoing current view angle may refer to any view angle in the camera's capturing process. A stored voxel may be a voxel that has been obtained and retained before capturing in the current view angle.

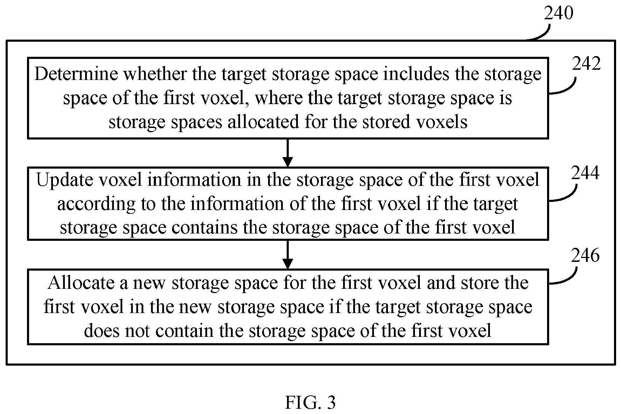

The implementation of step 240 (i.e., the manner of fusing voxels) can have various ways. In some embodiments, as shown in FIG. 3, step 240 may include the follows.

At 242, it is determined whether the target storage space includes the storage space of the first voxel, where the target storage space is storage spaces allocated for the stored voxels.

At 244, if the target storage space includes the storage space of the first voxel, voxel information in the storage space of the first voxel is updated according to information of the first voxel.

At 246, if the target storage space does not include the storage space of the first voxel, a new storage space is allocated for the first voxel, and the first voxel is stored in the new storage space.

Various methods may be available for achieving step 244. For example, old voxel information stored in the storage space of the first voxel may be replaced directly with the information of the first voxel. As another example, the information of the first voxel and the old voxel information stored in the storage space of the first voxel may be weightedly summed.

For example, the voxel may use the following data structure:

```
struct voxel {
float tsdf;
uchar color[3];
uchar weight;
}.
```

The depth information of voxel stored in the storage space of the first voxel can be updated (or fused) using the following formula:

$$D_{i+1} = (W_i * D_i + w_{i+1} * d_{i+1})/(W_i + w_{i+1}),$$

and

$$W_{i+1} = W_i + w_{i+1,}$$

where $D_i$ represents the tsdf value of voxel stored in the storage space of the first voxel, $d_{i+1}$ represents the tsdf value of the first voxel, $D_{i+1}$ represents the updated tsdf value, $W_i$ represents a weight of voxel stored in the storage space of the first voxel, $w_{i+1}$ represents a weight of the first voxel, and $W_{i+1}$ represents the updated weight.

An example of how the depth information of the first voxel is updated is described above. Correspondingly, the color information of the first voxel may also be updated in a similar manner, which is not further described here in detail.

In some embodiments, step 242 may include searching for a storage space of the first voxel in the target storage space according to the first voxel and pre-stored mapping relationship information, where the mapping relationship information can be used for indicating correspondences between stored voxels and storage spaces of the stored voxels; if the storage space of the first voxel is found, determining that the target storage space includes the storage space of the first voxel; if the storage space of the first voxel is not found, determining that the target storage space does not include the storage space of the first voxel.

As described above, in the existing technologies, voxels are continuously stored in a 3D array, which may have the advantage of simple addressing, but needs to ensure a continuity of voxel storage. Even if a voxel is an empty voxel (a voxel that does not contain any useful information, such as a voxel inside the target object), a storage space needs to be allocated for the voxel, and voxels cannot be arbitrarily discarded. In the embodiments of the present invention, voxels in the target object that have depth information not meeting the requirement may be discarded. Although the continuity of the voxel storage is destroyed by doing so, a large number of empty voxels can be discarded, and the storage resources can be saved to a large extent to improve computation efficiency. Further, in the case that the voxel storage is discontinuous, in order to enable rapid addressing of the voxels, in the embodiments of the present invention, mapping relationship information may be introduced to record a correspondence between the voxels and the storage locations of the stored voxels.

How the mapping relationship information indicates a correspondence between the stored voxels and the storage spaces of the stored voxels may have a plurality of types of manners. In some embodiments, a correspondence between the positions of the stored voxels in the 3D space and the storage spaces of the stored voxels (such as a starting address and an offset of the storage address) can be established.

In some embodiments, the voxel positions in the 3D space may be represented by coordinates of voxels in the world coordinate system. In order to obtain coordinates of a voxel in the world coordinate system, a camera pose during capturing in the current view angle may be determined first, and then based on the camera pose, the voxel may be converted into the world coordinate system. Various methods may be used to determine the camera pose. For example, a fast odometry from vision (FOVIS) may be used to determine the camera pose. Specifically, first, input image data can be filtered using a Gaussian smoothing filter to construct a three-layer image pyramid. Then a features-from-accelerated-test (FAST) corner detector may be used to detect enough local features in the image. Then a random sample consensus (RANSAC) algorithm may be used to robustly estimate a camera attitude using a key frame in the image data.

Various methods may be used to store and use the mapping relationship information. In some embodiments, the mapping relationship information may be stored in a hash table. The above-described searching for the storage space of the first voxel in the target storage space according to the first voxel and the pre-stored mapping relationship information may include, according to the first voxel and a hash table, through a hash algorithm, searching for the storage space of the first voxel in the target storage space. The hash table may have advantages of fast addressing, and can improve an efficiency of the 3D point cloud reconstruction process.

Optionally, in some embodiments, the hash table may record a correspondence between position information of stored voxel blocks and storage spaces of the stored voxel blocks. A voxel block may contain a plurality of spatially adjacent voxels. The position information of the stored voxel block may be used to indicate a spatial position of the stored voxel block in a 3D scene (e.g., 3D coordinates of a center point of the voxel block in the world coordinate system). The above-described searching for the storage space of the first voxel in the target storage space through the hash algorithm, according to the first voxel and the hash table, may include determining position information of a target voxel block that the first voxel belongs to; searching for a storage space of the target voxel block through the hash algorithm, according to the position information of the target voxel block and the hash table; and according to a position of the first voxel in the target voxel block, searching for the storage space of the first voxel in the storage space of the target voxel block.

In the embodiments of the present invention, each entry of a hash table may not correspond to one voxel, but may correspond to a voxel block. Recording the mapping relationship information in a unit of voxel block can reduce the number of the hash table entries, thereby reducing a probability of hash conflicts.

The voxel block may be a collection of voxels having adjacent relationships in certain space. For example, a voxel block may include spatially adjacent 8 * 8 * 8 voxels.

In some embodiments, voxel blocks may all be stored in an array. The hash table in the embodiments of the present invention may be designed in order to quickly and efficiently find a voxel block in an array. A hash table entry can contain a position of the voxel block, a pointer pointing to an array that stores the voxel block, an offset, or another member variable.

For example, in some embodiments, the hash table may record the above-described mapping relationship information using the following data structure:

```
struct hash_entry{
short pos[3];
short offset;
int pointer;
},
```

where pos[3] can represent world coordinates (x, y, z) of the voxel block in the 3D space, pointer can point to a starting address of an array storing the voxel block, offset can be used to indicate an offset between a starting address of a storage position of the voxel block and the starting address of the array storing the voxel block.

In a process of actual use, first, a target voxel block that the first voxel belongs to can be determined according to a spatial position relationship between the voxel and the voxel block. Then, according to the world coordinates (x, y, z) of the target voxel block in the 3D space and by searching in the hash table, it is determine whether a storage space has been allocated for the target voxel block. If the storage space has not been allocated for the target voxel block, then the storage space is allocated for the target voxel block and table entries of the hash table are updated. Then, information of the first voxel is stored in corresponding position in the storage space of the target voxel block. If the storage space has been allocated for the target voxel block, the storage space of the first voxel can be located in the storage space of the target voxel block, and then the information of the first voxel can be used to update the voxel information in the storage space of the first voxel. For detailed update methods for the voxel information, reference can be made to the foregoing descriptions, which are not further described here.

It should be noted that, in the embodiments of the present invention, locations of the target storage spaces are not restricted. The target storage spaces may be located in a memory of a graphics processing unit (GPU), or may be located in a memory of a central processing unit (CPU), or may even be located in an external storage device.

Optionally, in some embodiments, the target storage space may be located in a memory of a CPU and/or an external memory. Step 242 may include that a GPU determines whether the target storage space includes the storage space of the first voxel. Step 244 may include that the GPU reads the voxel information in the storage space of the first voxel from the target storage space through the CPU; that the GPU updates the voxel information in the storage space of the first voxel according to the information of the first voxel to obtain updated voxel information; and that the GPU stores the updated voxel information in the storage space of the first voxel through the CPU.

A GPU may have a strong image data processing capability, but a memory of the GPU may usually be relatively small, generally including 2-4 GB, which is not enough to store point cloud data of a large-scale scene. In order to avoid limitations of a GPU memory on a scale of a scene to be reconstructed, in the embodiments of the present invention, a CPU memory and/or an external storage device may be used to store voxels. Compared with the GPU memory (or referred to as a video memory), the CPU memory and/or the external storage device can provide a larger storage space.

Specifically, the GPU can first generate new voxels according to the image data. Then, before the new voxels are fused with the stored voxels, the GPU can read the voxels that need to be fused with the new voxels from the CPU memory and/or the external storage device into the GPU memory. Then, after voxel fusion is complete, the GPU can re-store the fused voxel data into the CPU memory and/or the external storage device. That is, in the embodiments of the present invention, data exchange may be based on a GPU, a CPU and/or an external storage device, such that the GPU memory may only need to store local data that is to be fused, and global data may be always stored in the CPU memory and/or the external storage device. Accordingly, the limitations of the GPU memory space may be overcome, allowing the embodiments of the present invention to be used for reconstructing a three-dimensional space of a larger dimension.

For example, in a 3D point cloud map reconstruction, the embodiments of the present invention may include using the CPU memory to store a reconstructed global map, using the GPU memory to store a local map, and constantly updating the local map stored in the GPU memory according to a scene change or a change of view angle, such that a limitation caused by the relatively small GPU memory on the scale of the scene to be reconstructed may be overcome.

It should be understood that the target object in the current view angle may be a stationary object, or may be a moving object. In the 3D point cloud reconstruction, what needs to be reconstructed may be one or more relatively stationary objects in a 3D sccnc, such as a building, a traffic light, etc. A moving object that appears temporarily in the 3D scene can be considered as an interference. Thus, a method for processing a moving object is provided below. The method can identify and effectively handle a moving object to speed up the 3D point cloud reconstruction process.

Step 220 includes, according to the invention, determining whether the target object is a moving object according to the image data; if the target object is a moving object, generating voxels of the target object, such that a value of depth information of each voxel in the target object is not within the preset range.

In the present invention, the value of the depth information of the moving object is controlled to be outside the preset range, such that each voxel in the target object is discarded. That is, in the present invention, processing the moving object can be avoided through controlling the value of the depth information, and the efficiency of the 3D point cloud reconstruction process can be improved.

Assume each voxel in the target object uses the following data structure:

```
struct voxel {
float tsdf;
uchar color[3];
uchar weight;
},
```

where tsdf is depth information of the voxel and is used to represent a distance between the first voxel and a surface of the target object. Assuming that the preset range can be $(D_{min}, D_{max})$, if the tsdf value of the voxel satisfies $D_{min}<tsdf<D_{max}$, the voxel may be retained; and if the tsdf value of the voxel does not satisfy $D_{min}<tsdf<D_{max}$, the voxel may be discarded.

When the target object is identified as a moving object, a tsdf value of each voxel in the target object can be controlled, such that the tsdf value of each voxel does not satisfy $D_{min}<tsdf<D_{max}$ and can be discarded. As such, handling of the moving object can be avoided and the three-dimensional point cloud reconstruction process can be sped up.

It should be noted that, in the present invention, the manner of determining whether the target object is a moving object according to the image data is not restricted. An existing algorithm for detecting and tracking a moving object may be used.

The apparatus embodiments of the present invention are described below. Because the apparatus embodiments can perform the above-described methods, foregoing method embodiments can be referenced to for those not described in detail.

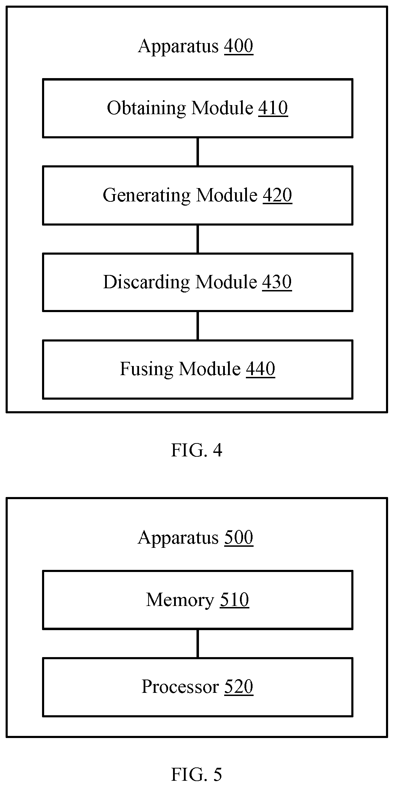

FIG. 4 is a schematic structural diagram of an apparatus for 3D point cloud reconstruction provided by an embodiment of the present invention. The apparatus 400 in FIG. 4 includes an obtaining module 410 configured to obtain image data in a current view angle; a generating module 420 configured to generate, according to the image data, voxels of a target object in the current view angle, where a voxel of the target object includes a first voxel, and the first voxel contains depth information; a discarding module 430 configured to discard the first voxel if a value of the depth information of the first voxel is not within a preset range; and a fusing module 440 configured to fuse the first voxel with stored voxels if the value of the depth information of the first voxel is within the preset range.

In the embodiments of the present invention, voxels may be used as points in a 3D point cloud, and a high accuracy dense 3D point cloud may be reconstructed. Further, in the embodiments of the present invention, depth information may be stored in voxels of the target object, and the voxels of the target object may be screened based on the depth information of the voxels. Voxels having depth information that does not meet the requirement may be discarded. As such, the amount of point cloud data that needs to be fused and stored may be reduced, and a real-time performance of the dense 3D cloud point reconstruction process may be improved.

Optionally, in some embodiments, the fusing module 440 may be configured to determine whether the target storage space includes a storage space of the first voxel, where the target storage space is a storage space allocated for the stored voxels; if the target storage space includes the storage space of the first voxel, update voxel information in the storage space of the first voxel according to information of the first voxel; and, if the target storage space does not include the storage space of the first voxel, allocate a new storage space for the first voxel and store the first voxel in the new storage space.

Optionally, in some embodiments, the fusing module 440 may be configured to search for the storage space of the first voxel in the target storage space according to the first voxel and pre-stored mapping relationship information, where the mapping relationship information can be used for indicating correspondences between stored voxels and storage spaces of the stored voxels; if the storage space of the first voxel is found, determine that the target storage space includes the storage space of the first voxel; and, if the storage space of the first voxel is not found, determine that the target storage space does not include the storage space of the first voxel.

Optionally, in some embodiments, the mapping relationship information may be stored in a hash table, and the fusing module 440 may be configured to search for, according to the first voxel and the hash table, the storage space of the first voxel in the target storage space through a hash algorithm.

Optionally, in some embodiments, the hash table may record the correspondence between the position information of the stored voxel block and the storage space of the stored voxel block. A voxel block may include a plurality of spatially adjacent voxels, and position information of the stored voxel block may be used to indicate a spatial position of the stored voxel block in a 3D scene. The fusing module 440 may be configured to determine position information of target voxel block that the first voxel belongs to; search for a storage space of the target voxel block through a hash algorithm, according to the position information of the target voxel block and the hash table; and according to a position of the first voxel in the target voxel block, search for the storage space of the first voxel in the storage space of the target voxel block.

Optionally, in some embodiments, the target storage space may be located in a memory of a CPU and/or an external storage device. The fusing module 440 may be configured to call a GPU to perform following operations, including: determining whether the target storage space includes the storage space of the first voxel; reading voxel information in the storage space of the first voxel from the target storage space through the CPU; updating voxel information in the storage space of the first voxel according to information of the first voxel to obtain updated voxel information; and storing the updated voxel information in the storage space of the first voxel through the CPU.

According to the invention, the generating module 420 is configured to determine whether the target object is a moving object according to the image data; and if the target object is a moving object, generate voxels of the target object, such that a value of depth information of each voxel in the target object is not within the preset range.

Optionally, in some embodiments, the generating module 420 may be configured to generate a depth image in the current view angle according to the image data; and perform voxelization on the target object according to the depth image to obtain voxels of the target object.

Optionally, in some embodiments, the first voxel may include color information and a weight of the color information. The generating module 420 may be configured to, if the target storage space includes a storage space of the first voxel, obtain a weighted sum of the color information of the first voxel and the color information of voxel in the storage space of the first voxel according to the weight of the color information of the first voxel.

Optionally, in some embodiments, the first voxel may also include a weight of the depth information. The generating module 420 may be configured to, if the target storage space includes the storage space of the first voxel, obtain a weighted sum of the depth information of the first voxel and the depth information of the voxel in the storage space of the first voxel according to the weight of the depth information of the first voxel.

Optionally, in some embodiments, a value of the depth information of the first voxel may be a truncated signed distance function value. The truncated signed distance function value may be used to indicate a distance between the first voxel and a surface of the target object.

FIG. 5 is a schematic structural diagram of an apparatus for 3D point cloud reconstruction provided by another embodiment of the present invention. The apparatus 500 of FIG. 5 includes a memory 510 configured to store instructions and a processor 520 configured to execute the instructions stored in the memory 510 to perform following operations: obtaining image data in a current view angle; generating voxels of a target object in the current view angle according to the image data, where a voxel of the target object includes a first voxel, and the first voxel contains depth information; discarding the first voxel if a value of the depth information of the first voxel is not within a preset range; and fusing the first voxel with stored voxels if the value of the depth information of the first voxel is within the preset range.

In the embodiments of the present invention, voxels may be used as points in a 3D point cloud, and a high accuracy dense 3D point cloud may be reconstructed. Further, in the embodiments of the present invention, depth information may be stored in voxels of the target object, and the voxels of the target object may be screened based on the depth information of the voxels. Voxels having depth information that does not meet the requirement may be discarded. As such, the amount of point cloud data that needs to be fused and stored may be reduced, and a real-time performance of the dense 3D cloud point reconstruction process may be improved.

Optionally, in some embodiments, fusing the first voxel with the stored voxels may include determining whether the target storage space includes a storage space of the first voxel, where the target storage space is a storage space allocated for the stored voxels; if the target storage space includes the storage space of the first voxel, updating voxel information in the storage space of the first voxel according to information of the first voxel; and, if the target storage space does not include the storage space of the first voxel, allocating a new storage space for the first voxel and storing the first voxel in the new storage space.

Optionally, in some embodiments, determining whether the target storage space includes the storage space of the first voxel may include searching for the storage space of the first voxel in the target storage space according to the first voxel and pre-stored mapping relationship information, where the mapping relationship information can be used for indicating correspondences between stored voxels and storage spaces of the stored voxels; if the storage space of the first voxel is found, determining that the target storage space includes the storage space of the first voxel; and, if the storage space of the first voxel is not found, determining that the target storage space does not include the storage space of the first voxel.

Optionally, in some embodiments, the mapping relationship information may be stored in a hash table. Searching for the storage space of the first voxel in the target storage space according to the first voxel and the pre-stored mapping relationship information may include searching for, according to the first voxel and the hash table, the storage space of the first voxel in the target storage space through a hash algorithm.

Optionally, in some embodiments, the hash table may record a correspondence between position information of a stored voxel block and a storage space of the stored voxel block. A voxel block may include a plurality of spatially adjacent voxels, and position information of the stored voxel block may be used to indicate a spatial position of the stored voxel block in a 3D scene. Searching for the storage space of the first voxel in the target storage space through the hash algorithm according to the first voxel and the hash table may include determining position information of the target voxel block that the first voxel belongs to; searching for a storage space of the target voxel block through the hash algorithm, according to the position information of target voxel block and the hash table; and according to a position of the first voxel in the target voxel block, searching for the storage space of the first voxel in the storage space of the target voxel block.

Optionally, in some embodiments, the target storage space may be located in a memory of a CPU and/or an external memory. A GPU can perform both the operation of determining whether the target storage space includes a storage space of the first voxel and the operation of updating voxel information in the storage space of the first voxel according to information of the first voxel. Further, determining whether the target storage space includes the storage space of the first voxel may include operations including determining whether the target storage space includes the storage space of the first voxel. Updating the voxel information in the storage space of the first voxel according to the information of the first voxel may include reading the voxel information in the storage space of the first voxel from the target storage space through the CPU; updating the voxel information in the storage space of the first voxel according to the information of the first voxel to obtain updated voxel information; and storing the updated voxel information in the storage space of the first voxel through the CPU.

According to the invention, generating voxels of the target object in the current view angle according to the image data includes determining whether the target object is a moving object according to the image data; and, if the target object is a moving object, generating voxels of the target object, such that a value of depth information of each voxel in the target object is not within a preset range.

Optionally, in some embodiments, generating voxels of the target object in the current view angle according to the image data may include generating a depth image in the current view angle according to the image data; and performing voxelization on the target object according to the depth image to obtain voxels of the target object.

Optionally, in some embodiments, the first voxel may include color information and a weight of the color information. Fusing the first voxel with the stored voxels may include, if the target storage space includes a storage space of the first voxel, obtaining a weighted sum of the color information of the first voxel and the color information of voxel in the storage space of the first voxel according to the weight of the color information of the first voxel.

Optionally, in some embodiments, the first voxel may further include a weight of the depth information. Fusing the first voxel with the stored voxels may include, if the target storage space contains the storage space of the first voxel, obtaining a weighted sum of the depth information of the first voxel and the depth information of voxel in the storage space of the first voxel according to the weight of the depth information of the first voxel.

Optionally, in some embodiments, a value of the depth information of the first voxel may be a truncated signed distance function value. The truncated signed distance function value may be used to indicate a distance between the first voxel and a surface of the target object.

The above-described embodiments may be implemented in whole or in part by software, hardware, firmware, or any other combination. When the above-described embodiments are implemented using software, the implementation may be performed in whole or in part in the form of a computer program product. The computer program product may include one or more computer instructions. The process or function described in accordance with the embodiments of the present invention may be generated in whole or in part when the computer program instructions are loaded and executed on a computer. The computer may be a general purpose computer, a dedicated computer, a computer network, or other programmable device. The computer instructions may be stored in a computer-readable storage medium, or may be transferred from one computer-readable storage medium to another computer-readable storage medium. For example, the computer instructions may be transferred from a website, a computer, a server, or a data center to another website, computer, server or data center, through a wired connection (such as coaxial cable, optical fiber, or digital subscriber line (DSL)) or a wireless connection (such as infrared, wireless, microwave, etc.). The computer-readable storage medium may be any available medium that the computer can access or a data storage device such as a server, a data center, or the like that contains one or more integrated available media. The available media may be magnetic media (e.g., floppy disks, hard disks, magnetic tapes), optical media (e.g., digital video discs (DVDs)), or semiconductor media (e.g., solid state disks (SSDs)), etc.

Those of ordinary skill in the art will appreciate that the elements and algorithm steps of each of the examples described in connection with the embodiments disclosed herein can be implemented in electronic hardware, or in a combination of computer software and electronic hardware. Whether these functions are performed in hardware or software may depend on the specific application and design constraints of the technical solution. Those skilled in the art may use different methods to implement the described functions for different application scenarios, but such implementations should not be considered as beyond the scope of the present application.

It should be understood that, in the embodiments provided in the present application, the disclosed system, apparatus, and method may be implemented in other manners. For example, the above-described apparatus embodiments are merely for illustrative purposes. For example, the division of units may only be a logical function division, and there may be other ways of dividing the units in actual implementation. For example, multiple units or components can be combined or may be integrated into another system, or some features can be ignored, or not executed. Further, the mutual coupling or direct coupling or communication connection shown or discussed may be an indirect coupling or a communication connection through some interfaces, devices, or units, which may be electrical, mechanical, or in other form.

The units described as separate components may or may not be physically separate, and a component shown as a unit may or may not be a physical unit. That is, the units may be located in one place or may be distributed over a plurality of network elements. Some or all of the units may be selected according to the actual needs to achieve the object of the solution of the embodiments.

In addition, the functional units in the various embodiments of the present application may be integrated in one processing unit, or each unit may exist physically as an individual unit, or two or more units may be integrated in one unit.

The foregoing descriptions are merely specific embodiments of the present application, but the protection scope of the present application is not limited thereto. Any person skilled in the art will be able to easily make variations or substitutions within the technical scope disclosed in the present application, all of which are within the protection scope of the present application. Thus, the protection scope of the present application should be based on the protection scope of the claims.

**Claims**

1. A method for 3-dimensional point cloud reconstruction, comprising:

    obtaining (210) image data in a current view angle;
    generating (220) voxels of a target object in the current view angle according to the image data, the voxels of the target object including a first voxel, and the first voxel containing depth information;
    if a value of the depth information of the first voxel is not within a preset range, the preset range being based on a surface of the target object, discarding (230) the first voxel;
    if the value of the depth information of the first voxel is within the preset range, fusing (240) the first voxel with stored voxels; and
    the method being **characterized in that**
    generating (220) the voxels of the target object in the current view angle according to the image data includes:

        determining, according to the image data, whether the target object is a moving object; and
        if the target object is a moving object, generating the voxels of the target object such that a value of depth information of each voxel in the target object is not within the preset range.

2. The method of claim 1, wherein fusing the first voxel with the stored voxels includes:

    determining whether a target storage space includes a storage space of the first voxel, the target storage space being storage spaces allocated for the stored voxels;
    if the target storage space includes the storage space of the first voxel, updating voxel information in the storage space of the first voxel according to information of the first voxel; and
    if the target storage space does not include the storage space of the first voxel, allocating a new storage space for the first voxel and storing the first voxel in the new storage space.

3. The method according to claim 2, wherein determining whether the target storage space includes the storage space of the first voxel includes:

    searching for the storage space of the first voxel in the target storage space according to the first voxel and pre-stored mapping relationship information, the mapping relationship information being used for indicating correspondences between the stored voxels and storage spaces for the stored voxels;
    if the storage space of the first voxel is found, determining that the target storage space includes the storage space of the first voxel; and
    if the storage space of the first voxel is not found, determining that the target storage space does not include the storage space of the first voxel.

4. The method according to any one of claims 1 to 3, wherein generating the voxels of the target object in the current view angle according to the image data includes:

generating a depth image in the current view angle according to the image data; and
performing voxelization on the target object according to the depth image to obtain the voxels of the target object.

5. The method according to any one of claims 1 to 4, wherein:

the first voxel includes color information and a weight of the color information, and
fusing the first voxel with the stored voxels includes:
if a target storage space includes a storage space of the first voxel, obtaining a weighted sum of the color information of the first voxel and color information of voxel in the storage space of the first voxel according to the weight of the color information of the first voxel.

6. The method according to any one of claims 1 to 5, wherein:

the first voxel includes a weight of the depth information, and
fusing the first voxel with the stored voxel includes:
if a target storage space includes a storage space of the first voxel, obtaining a weighted sum of the depth information of the first voxel and depth information of voxel in the storage space of the first voxel according to the weight of the depth information of the first voxel.

7. The method according to any one of claims 1 to 6, wherein:

a value of the depth information of the first voxel is a truncated signed distance function value, and
the truncated signed distance function value is used to indicate a distance between the first voxel and a surface of the target object.

8. An apparatus (400, 500) for reconstructing a three-dimensional point cloud, comprising:

an obtaining module (410) configured to obtain image data in a current view angle;
a generating module (420) configured to generate voxels of a target object in the current view angle according to the image data, the voxels of the target object including a first voxel, and the first voxel containing depth information;
a discarding module (430) configured to discard, if a value of the depth information of the first voxel is not within a preset range, the first voxel, the preset range being based on a surface of the target object; and
a fusing module (440) configured to fuse, if the value of the depth information of the first voxel is within the preset range, the first voxel with stored voxels; and
the apparatus (400,500) being **characterized in that**
the generating module (420) is further configured to:

determine, according to the image data, whether the target object is a moving object; and
if the target object is a moving object, generate the voxels of the target object such that a value of depth information of each voxel in the target object is not within the preset range.

9. The apparatus (400, 500) according to claim 8, wherein the fusing module (440) is further configured to:

determine whether a target storage space includes a storage space of the first voxel, the target storage space being storage spaces allocated for the stored voxels;
if the target storage space includes the storage space of the first voxel, update voxel information in the storage space of the first voxel according to information of the first voxel; and
if the target storage space does not include the storage space of the first voxel, allocate a new storage space for the first voxel and store the first voxel in the new storage space.

10. The apparatus (400, 500) according to claim 9, wherein:

the target storage space is located in a memory (510) of a central processing unit and/or an external storage device,
the fusing module (440) is further configured to call a graphics processing unit to perform:

determining whether the target storage space includes the storage space of the first voxel;

reading the voxel information in the storage space of the first voxel from the target storage space through the central processing unit;

updating the voxel information in the storage space of the first voxel according to the information of the first voxel to obtain updated voxel information; and

storing the updated voxel information in the storage space of the first voxel through the central processing unit.

**11.** The apparatus (400, 500) according to any one of claims 8 to 10 wherein the generating module (420) is further configured to:

generate a depth image in the current view angle according to the image data; and

perform voxelization on the target object according to the depth image to obtain the voxels of the target object.

**12.** The apparatus (400, 500) according to any one of claims 8 to 11, wherein:

the first voxel includes color information and a weight of the color information, and

the generating module (420) is configured to, if a target storage space includes a storage space of the first voxel, obtain a weighted sum of the color information of the first voxel and color information of voxel in the storage space of the first voxel according to the weight of the color information of the first voxel.

**13.** The apparatus (400, 500) according to any one of claims 8 to 12, wherein:

the first voxel further includes a weight of the depth information, and

the generating module (420) is configured to, if a target storage space contains a storage space of the first voxel, obtain a weighted sum of the depth information of the first voxel and depth information of voxel in the storage space of the first voxel according to the weight of the depth information of the first voxel, or wherein:

a value of the depth information of the first voxel is a truncated signed distance function value, and

the truncated signed distance function value is used to indicate a distance between the first voxel and a surface of the target object.

**Patentansprüche**

**1.** Verfahren für eine 3-dimensionale Punktwolkenrekonstruktion, das Folgendes umfasst:

Erhalten (210) von Bilddaten in einem aktuellen Sichtwinkel;

Erzeugen (220) von Voxeln eines Zielobjekts im aktuellen Sichtwinkel gemäß den Bilddaten, wobei die Voxel des Zielobjekts ein erstes Voxel beinhalten und wobei das erste Voxel Tiefeninformationen enthält;

Verwerfen (230) des ersten Voxels, wenn ein Wert der Tiefeninformationen des ersten Voxels nicht in einem voreingestellten Bereich liegt, wobei der voreingestellte Bereich auf einer Fläche des Zielobjekts basiert;

Fusionieren (240) des ersten Voxels mit gespeicherten Voxeln, wenn der Wert der Tiefeninformationen des ersten Voxels im voreingestellten Bereich liegt; und

wobei das Verfahren **dadurch gekennzeichnet ist, dass**

das Erzeugen (220) der Voxel des Zielobjekts im aktuellen Sichtwinkel gemäß den Bilddaten Folgendes beinhaltet:

Bestimmen gemäß den Bilddaten, ob das Zielobjekt ein sich bewegendes Objekt ist; und

Erzeugen der Voxel des Zielobjekts derart, dass ein Wert von Tiefeninformationen jedes Voxels im Zielobjekt nicht im voreingestellten Bereich liegt, wenn das Zielobjekt ein sich bewegendes Objekt ist.

**2.** Verfahren nach Anspruch 1, wobei das Fusionieren des ersten Voxels mit den gespeicherten Voxeln Folgendes beinhaltet:

Bestimmen, ob ein Zielspeicherplatz einen Speicherplatz des ersten Voxels beinhaltet, wobei der Zielspeicherplatz Speicherplätze ist, die für die gespeicherten Voxel zugeteilt sind;

Aktualisieren von Voxelinformationen im Speicherplatz des ersten Voxels gemäß Informationen des ersten Voxels, wenn der Zielspeicherplatz den Speicherplatz des ersten Voxels beinhaltet; und

Zuteilen eines neuen Speicherplatzes für das erste Voxel und Speichern des ersten Voxels im neuen Speicherplatz, wenn der Zielspeicherplatz den Speicherplatz des ersten Voxels nicht beinhaltet.

3. Verfahren nach Anspruch 2, wobei das Bestimmen, ob der Zielspeicherplatz den Speicherplatz des ersten Voxels beinhaltet, Folgendes beinhaltet:

Suchen nach dem Speicherplatz des ersten Voxels im Zielspeicherplatz gemäß dem ersten Voxel und vorab gespeicherten Zuordnungsbeziehungsinformationen, wobei die Zuordnungsbeziehungsinformationen zum Angeben von Entsprechungen zwischen den gespeicherten Voxeln und Speicherplätzen für die gespeicherten Voxel verwendet werden;

Bestimmen, dass der Zielspeicherplatz den Speicherplatz des ersten Voxels beinhaltet, wenn der Speicherplatz des ersten Voxels gefunden wird; und

Bestimmen, dass der Zielspeicherplatz den Speicherplatz des ersten Voxels nicht beinhaltet, wenn der Speicherplatz des ersten Voxels nicht gefunden wird.

4. Verfahren nach einem der Ansprüche 1 bis 3, wobei das Erzeugen der Voxel des Zielobjekts im aktuellen Sichtwinkel gemäß den Bilddaten Folgendes umfasst:

Erzeugen eines Tiefenbildes im aktuellen Sichtwinkel gemäß den Bilddaten und

Durchführen einer Voxelisierung am Zielobjekt gemäß dem Tiefenbild, um die Voxel des Zielobjekts zu erhalten.

5. Verfahren nach einem der Ansprüche 1 bis 4, wobei:

das erste Voxel Farbinformationen und eine Gewichtung der Farbinformationen beinhaltet und

das Fusionieren des ersten Voxels mit den gespeicherten Voxeln Folgendes beinhaltet:

Erhalten einer gewichteten Summe der Farbinformationen des ersten Voxels und Farbinformationen des Voxels im Speicherplatz des ersten Voxels gemäß der Gewichtung der Farbinformationen des ersten Voxels, wenn ein Zielspeicherplatz einen Speicherplatz des ersten Voxels beinhaltet.

6. Verfahren nach einem der Ansprüche 1 bis 5, wobei:

das erste Voxel eine Gewichtung der Tiefeninformationen beinhaltet und

das Fusionieren des ersten Voxels mit dem gespeicherten Voxel Folgendes beinhaltet:

Erhalten einer gewichteten Summe der Tiefeninformationen des ersten Voxels und Tiefeninformationen des Voxels im Speicherplatz des ersten Voxels gemäß der Gewichtung der Tiefeninformationen des ersten Voxels, wenn ein Zielspeicherplatz einen Speicherplatz des ersten Voxels beinhaltet.

7. Verfahren nach einem der Ansprüche 1 bis 6, wobei:

ein Wert der Tiefeninformationen des ersten Voxels ein abgeschnittener signierter Abstandsfunktionswert ist und der abgeschnittene signierte Abstandsfunktionswert verwendet wird, um einen Abstand zwischen dem ersten Voxel und einer Fläche des Zielobjekts anzugeben.

8. Einrichtung (400, 500) zum Rekonstruieren einer dreidimensionalen Punktwolke, die Folgendes umfasst:

ein Erhaltungsmodul (410), das dazu ausgelegt ist, Bilddaten in einem aktuellen Sichtwinkel zu erhalten;

ein Erzeugungsmodul (420), das dazu ausgelegt ist, Voxel eines Zielobjekts im aktuellen Sichtwinkel gemäß den Bilddaten zu erzeugen, wobei die Voxel des Zielobjekts ein erstes Voxel beinhalten und wobei das erste Voxel Tiefeninformationen enthält;

ein Verwerfungsmodul (430), das dazu ausgelegt ist, das erste Voxel zu verwerfen, wenn ein Wert der Tiefeninformationen des ersten Voxels nicht in einem voreingestellten Bereich liegt, wobei der voreingestellte Bereich auf einer Fläche des Zielobjekts basiert;

ein Fusionierungsmodul (440), das dazu ausgelegt ist, das erste Voxel mit gespeicherten Voxeln zu fusionieren, wenn der Wert der Tiefeninformationen des ersten Voxels im voreingestellten Bereich liegt; und

wobei die Einrichtung (400, 500) **dadurch gekennzeichnet ist, dass**

das Erzeugungsmodul (420) ferner zu Folgendem ausgelegt ist:

Bestimmen gemäß der Bilddaten, ob das Zielobjekt ein sich bewegendes Objekt ist; und
Erzeugen der Voxel des Zielobjekts derart, dass ein Wert von Tiefeninformationen jedes Voxels im Zielobjekt nicht im voreingestellten Bereich liegt, wenn das Zielobjekt ein sich bewegendes Objekt ist.

**9.** Einrichtung (400, 500) nach Anspruch 8, wobei das Fusionierungsmodul (440) ferner zu Folgendem ausgelegt ist:

Bestimmen, ob ein Zielspeicherplatz einen Speicherplatz des ersten Voxels beinhaltet, wobei der Zielspeicherplatz Speicherplätze ist, die für die gespeicherten Voxel zugeteilt sind;
Aktualisieren von Voxelinformationen im Speicherplatz des ersten Voxels gemäß Informationen des ersten Voxels, wenn der Zielspeicherplatz den Speicherplatz des ersten Voxels beinhaltet; und
Zuteilen eines neuen Speicherplatzes für das erste Voxel und Speichern des ersten Voxels im neuen Speicherplatz, wenn der Zielspeicherplatz den Speicherplatz des ersten Voxels nicht beinhaltet.

**10.** Einrichtung (400, 500) nach Anspruch 9, wobei:

der Zielspeicherplatz sich in einem Speicher (510) einer zentralen Verarbeitungseinheit und/oder einer externen Speichervorrichtung befindet,
das Fusionierungsmodul (440) ferner dazu ausgelegt ist, eine Grafikverarbeitungseinheit aufzurufen, um Folgendes durchzuführen:

Bestimmen, ob der Zielspeicherplatz den Speicherplatz des ersten Voxels beinhaltet;
Lesen der Voxelinformationen im Speicherplatz des ersten Voxels über die zentrale Verarbeitungseinheit im Zielspeicherplatz;
Aktualisieren der Voxelinformationen im Speicherplatz des ersten Voxels gemäß den Informationen des ersten Voxels, um aktualisierte Voxelinformationen zu erhalten; und
Speichern der aktualisierten Voxelinformationen über die zentrale Verarbeitungseinheit im Speicherplatz des ersten Voxels.

**11.** Einrichtung (400, 500) nach einem der Ansprüche 8 bis 10, wobei das Erzeugungsmodul (420) ferner zu Folgendem ausgelegt ist:

Erzeugen eines Tiefenbildes im aktuellen Sichtwinkel gemäß den Bilddaten und
Durchführen einer Voxelisierung am Zielobjekt gemäß dem Tiefenbild, um die Voxel des Zielobjekts zu erhalten.

**12.** Einrichtung (400, 500) nach einem der Ansprüche 8 bis 11, wobei:

das erste Voxel Farbinformationen und eine Gewichtung der Farbinformationen beinhaltet und
das Erzeugungsmodul (420) dazu ausgelegt ist, eine gewichtete Summe der Farbinformationen des ersten Voxels und Farbinformationen des Voxels im Speicherplatz des ersten Voxels gemäß der Gewichtung der Farbinformationen des ersten Voxels zu erhalten, wenn ein Zielspeicherplatz einen Speicherplatz des ersten Voxels beinhaltet.

**13.** Einrichtung (400, 500) nach einem der Ansprüche 8 bis 12, wobei:

das erste Voxel ferner eine Gewichtung der Tiefeninformationen beinhaltet und
das Erzeugungsmodul (420) dazu ausgelegt ist, eine gewichtete Summe der Tiefeninformationen des ersten Voxels und Tiefeninformationen des Voxels im Speicherplatz des ersten Voxels gemäß der Gewichtung der Tiefeninformationen des ersten Voxels zu erhalten, wenn ein Zielspeicherplatz einen Speicherplatz des ersten Voxels enthält, oder
wobei:

ein Wert der Tiefeninformationen des ersten Voxels ein abgeschnittener signierter Abstandsfunktionswert ist und
der abgeschnittene signierte Abstandsfunktionswert verwendet wird, um einen Abstand zwischen dem ersten Voxel und einer Fläche des Zielobjekts anzugeben.

**Revendications**

1. Procédé de reconstruction de nuages de points tridimensionnels, comprenant les étapes ci-dessous consistant à :

   obtenir (210) des données d'image dans un angle de vue en cours ;
   générer (220) des voxels d'un objet cible dans l'angle de vue en cours selon les données d'image, les voxels de l'objet cible incluant un premier voxel, et le premier voxel contenant des informations de profondeur ;
   si une valeur des informations de profondeur du premier voxel ne se situe pas dans une plage prédéfinie, la plage prédéfinie étant basée sur une surface de l'objet cible, rejeter (230) le premier voxel ;
   si la valeur des informations de profondeur du premier voxel se situe dans la plage prédéfinie, fusionner (240) le premier voxel avec des voxels stockés ; et
   le procédé étant **caractérisé en ce que** l'étape de génération (220) des voxels de l'objet cible dans l'angle de vue en cours selon les données d'image inclut les étapes ci-dessous consistant à :

   déterminer, selon les données d'image, si l'objet cible est un objet en mouvement ; et
   si l'objet cible est un objet en mouvement, générer les voxels de l'objet cible de sorte qu'une valeur d'informations de profondeur de chaque voxel dans l'objet cible ne se situe pas dans la plage prédéfinie.

2. Procédé selon la revendication 1, dans lequel l'étape de fusion du premier voxel avec les voxels stockés inclut les étapes ci-dessous consistant à :

   déterminer si un espace de stockage cible inclut un espace de stockage du premier voxel, l'espace de stockage cible correspondant à des espaces de stockage alloués pour les voxels stockés ;
   si l'espace de stockage cible inclut l'espace de stockage du premier voxel, mettre à jour des informations de voxel dans l'espace de stockage du premier voxel selon des informations du premier voxel ; et
   si l'espace de stockage cible n'inclut pas l'espace de stockage du premier voxel, allouer un nouvel espace de stockage pour le premier voxel et stocker le premier voxel dans le nouvel espace de stockage.

3. Procédé selon la revendication 2, dans lequel l'étape consistant à déterminer si l'espace de stockage cible inclut l'espace de stockage du premier voxel inclut les étapes ci-dessous consistant à :

   rechercher l'espace de stockage du premier voxel dans l'espace de stockage cible selon le premier voxel et des informations de relation de mise en correspondance pré-stockées, les informations de relation de mise en correspondance étant utilisées en vue d'indiquer des correspondances entre les voxels stockés et des espaces de stockage pour les voxels stockés ;
   si l'espace de stockage du premier voxel est trouvé, déterminer que l'espace de stockage cible inclut l'espace de stockage du premier voxel ; et
   si l'espace de stockage du premier voxel n'est pas trouvé, déterminer que l'espace de stockage cible n'inclut pas l'espace de stockage du premier voxel.

4. Procédé selon l'une quelconque des revendications 1 à 3, dans lequel l'étape de génération des voxels de l'objet cible dans l'angle de vue en cours selon les données d'image comprend les étapes ci-dessous consistant à :

   générer une image de profondeur dans l'angle de vue en cours selon les données d'image ; et
   mettre en œuvre une voxélisation de l'objet cible selon l'image de profondeur, en vue d'obtenir les voxels de l'objet cible.

5. Procédé selon l'une quelconque des revendications 1 à 4, dans lequel :

   le premier voxel inclut des informations de couleur et un poids des informations de couleur ; et
   l'étape de fusion du premier voxel avec les voxels stockés comprend l'étape ci-dessous consistant à :
   si un espace de stockage cible inclut un espace de stockage du premier voxel, obtenir une somme pondérée des informations de couleur du premier voxel et des informations de couleur de voxel dans l'espace de stockage du premier voxel selon le poids des informations de couleur du premier voxel.

6. Procédé selon l'une quelconque des revendications 1 à 5, dans lequel :

   le premier voxel inclut un poids des informations de profondeur ; et

l'étape de fusion du premier voxel avec les voxels stockés inclut les étapes ci-dessous consistant à :
si un espace de stockage cible inclut un espace de stockage du premier voxel, obtenir une somme pondérée des informations de profondeur du premier voxel et des informations de profondeur de voxel dans l'espace de stockage du premier voxel selon le poids des informations de profondeur du premier voxel.

7.  Procédé selon l'une quelconque des revendications 1 à 6, dans lequel :

    une valeur des informations de profondeur du premier voxel est une valeur de fonction de distance signée tronquée ; et
    la valeur de fonction de distance signée tronquée est utilisée en vue d'indiquer une distance entre le premier voxel et une surface de l'objet cible.

8.  Appareil (400, 500) pour reconstruire un nuage de points tridimensionnel, comprenant :

    un module d'obtention (410) configuré de manière à obtenir des données d'image dans un angle de vue en cours ;
    un module de génération (420) configuré de manière à générer des voxels d'un objet cible dans l'angle de vue en cours selon les données d'image, les voxels de l'objet cible incluant un premier voxel, et le premier voxel contenant des informations de profondeur ;
    un module de rejet (430) configuré de manière à rejeter, si une valeur des informations de profondeur du premier voxel ne se situe pas dans une plage prédéfinie, le premier voxel, la plage prédéfinie étant basée sur une surface de l'objet cible ; et
    un module de fusion (440) configuré de manière à fusionner, si la valeur des informations de profondeur du premier voxel se situe dans la plage prédéfinie, le premier voxel avec les voxels stockés ; et
    l'appareil (400, 500) étant **caractérisé en ce que** le module de génération (420) est en outre configuré de manière à :

    déterminer, selon les données d'image, si l'objet cible est un objet en mouvement ; et
    si l'objet cible est un objet en mouvement, générer les voxels de l'objet cible de sorte qu'une valeur d'informations de profondeur de chaque voxel dans l'objet cible ne se situe pas dans la plage prédéfinie.

9.  Appareil (400, 500) selon la revendication 8, dans lequel le module de fusion (440) est en outre configuré de manière à :

    déterminer si un espace de stockage cible inclut un espace de stockage du premier voxel, l'espace de stockage cible correspondent à des espaces de stockage alloués pour les voxels stockés ;
    si l'espace de stockage cible inclut l'espace de stockage du premier voxel, mettre à jour des informations de voxel dans l'espace de stockage du premier voxel selon des informations du premier voxel ; et
    si l'espace de stockage cible n'inclut pas l'espace de stockage du premier voxel, allouer un nouvel espace de stockage pour le premier voxel et stocker le premier voxel dans le nouvel espace de stockage.

10. Appareil (400, 500) selon la revendication 9, dans lequel :

    l'espace de stockage cible est situé dans une mémoire (510) d'une unité centrale de traitement et/ou d'un dispositif de stockage externe ;
    le module de fusion (440) est en outre configuré de manière à appeler une unité de traitement graphique en vue de mettre en œuvre les étapes ci-dessous consistant à :

    déterminer si l'espace de stockage cible inclut l'espace de stockage du premier voxel ;
    lire les informations de voxel dans l'espace de stockage du premier voxel, à partir de l'espace de stockage cible, par l'intermédiaire de l'unité centrale de traitement ;
    mettre à jour les informations de voxel dans l'espace de stockage du premier voxel selon les informations du premier voxel, en vue d'obtenir des informations de voxel mises à jour ; et
    stocker les informations de voxel mises à jour dans l'espace de stockage du premier voxel, par le biais de l'unité centrale de traitement.

11. Appareil (400, 500) selon l'une quelconque des revendications 8 à 10, dans lequel le module de génération (420) est en outre configuré de manière à :

générer une image de profondeur dans l'angle de vue en cours selon les données d'image ; et
mettre en œuvre une voxélisation sur l'objet cible selon l'image de profondeur, en vue d'obtenir les voxels de l'objet cible.

12. Appareil (400, 500) selon l'une quelconque des revendications 8 à 11, dans lequel :

le premier voxel inclut des informations de couleur et un poids des informations de couleur ; et
le module de génération (420) est configuré de manière à, si un espace de stockage cible inclut un espace de stockage du premier voxel, obtenir une somme pondérée des informations de couleur du premier voxel et des informations de couleur de voxel dans l'espace de stockage du premier voxel, selon le poids des informations de couleur du premier voxel.

13. Appareil (400, 500) selon l'une quelconque des revendications 8 à 12, dans lequel :

le premier voxel inclut en outre un poids des informations de profondeur ; et
le module de génération (420) est configuré de manière à, si un espace de stockage cible contient un espace de stockage du premier voxel, obtenir une somme pondérée des informations de profondeur du premier voxel et des informations de profondeur de voxel dans l'espace de stockage du premier voxel, selon le poids des informations de profondeur du premier voxel ; ou
dans lequel :

une valeur des informations de profondeur du premier voxel est une valeur de fonction de distance signée tronquée ; et
la valeur de fonction de distance signée tronquée est utilisée en vue d'indiquer une distance entre le premier voxel et une surface de l'objet cible.

```
        ┌─────────────────────┐
        │    Obtain Image     │──────────────────┐
        └─────────────────────┘                  │
                   │                              │
                   ▼                              │
        ┌─────────────────────┐                  │
        │   Construct Depth   │◄──────────┐      │
        │       Image         │            │      │
        └─────────────────────┘            │      │
                   │                        │      │
                   ▼                        │      ▼
        ┌─────────────────────┐    ┌─────────────────────┐
        │    Construct 3-     │    │                     │
        │    dimensional      │    │    Estimate Pose    │
        │    Point Cloud      │    │                     │
        └─────────────────────┘    └─────────────────────┘
```

FIG. 1

┌──────────────────────────────────────────────────────────────────┐
│          Obtain image data in a current view angle                │  210
└──────────────────────────────────────────────────────────────────┘
                              │
                              ▼
┌──────────────────────────────────────────────────────────────────┐
│     Generate voxels of a target object in the current view angle   │
│   according to the image data, where a voxel of the target object  │  220
│       includes a first voxel, and the first voxel contains depth   │
│                          information                               │
└──────────────────────────────────────────────────────────────────┘
                              │
                              ▼
┌──────────────────────────────────────────────────────────────────┐
│  Discard the first voxel if a value of the depth information of the │  230
│            first voxel is not within a preset range               │
└──────────────────────────────────────────────────────────────────┘
                              │
                              ▼
┌──────────────────────────────────────────────────────────────────┐
│   Fuse the first voxel with stored voxels if the value of the depth │  240
│     information of the first voxel is within the preset range      │
└──────────────────────────────────────────────────────────────────┘

FIG. 2

240

Determine whether the target storage space includes the storage space of the first voxel, where the target storage space is storage spaces allocated for the stored voxels — 242

Update voxel information in the storage space of the first voxel according to the information of the first voxel if the target storage space contains the storage space of the first voxel — 244

Allocate a new storage space for the first voxel and store the first voxel in the new storage space if the target storage space does not contain the storage space of the first voxel — 246

FIG. 3

Apparatus 400

Obtaining Module 410

Generating Module 420

Discarding Module 430

Fusing Module 440

FIG. 4

Apparatus 500

Memory 510

Processor 520

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103942832 A
- CN 102622776 A